# EUROPÄISCHE PATENTSCHRIFT

(11) **EP 2 999 089 B1**
(45) Veröffentlichungstag und Bekanntmachung des Hinweises auf die Patenterteilung: **08.03.2017**
(21) Anmeldenummer: 14185534.6
(22) Anmeldetag: 19.09.2014
(51) Int. Cl.: H02K 1/24, H02K 1/02

(54) **Reluktanzläufer**
Reluctance rotor
Rotor à réluctance

(43) Veröffentlichungstag der Anmeldung: 23.03.2016
(73) Patentinhaber: Siemens Aktiengesellschaft, 80333 München (DE)
(72) Erfinder: Mader, Daniel, 97616 Bad Neustadt a.d. Saale (DE); Vollmer, Rolf, 36129 Gersfeld (DE)

(56) Entgegenhaltungen:
- EP-A1- 2 775 591
- WO-A1-2011/032201
- GB-A- 2 506 683
- US-A- 5 693 250
- US-A1- 2012 161 551
- US-A1- 2014 117 791

## Beschreibung

Die Erfindung betrifft einen Reluktanzläufer, eine dynamoelektrische Maschine mit einem derartigen Läufer, die Verwendung einer derartigen Maschine und ein Verfahren zur Herstellung eines Reluktanzläufers.

Aus der US2012/0161551 A1, der EP 2775591 A1, sowie der GB 2506683 A sind Reluktanzläufer für eine elektrische Maschine bekannt.

Reluktanzläufer nutzen unterschiedliche Induktivitäten des Blechpakets, um ein Drehmoment zu erzeugen. Dabei werden die unterschiedlichen Induktivitäten - die Ld- und Lq-Achse durch Ausstanzungen am Blechpaket geschaffen. Dieses Ausstanzen ist insbesondere für geringere Läuferdurchmesser, als auch für höhere Drehzahlen denkbar ungeeignet, da sich durch Fliehkraftbeanspruchung die Läufer deformieren. Zusätzliche Bandagen um die Fliehkraftbeanspruchungen aufzunehmen würden insbesondere bei vergleichsweise kleinen dynamoelektrischen Maschinen die Luftspaltweite reduzieren, und würden so u.a. die Maschine weniger effizient gestalten.

Ausgehend davon liegt der Erfindung die Aufgabe zugrunde, einen Reluktanzläufer für dynamoelektrische Maschinen hoher Drehzahlen und insbesondere mit geringer Achshöhe zu schaffen, wobei der Reluktanzläufer in einfacher Art und Weise herstellbar und ausreichende elektrische Eigenschaften aufweisen soll.

Die Lösung der gestellten Aufgabe gelingt durch einen Reluktanzläufer mit einer Wellenbohrung, in die eine Welle drehfest eingesetzt ist, zumindest einen um diese Welle angeordneten Tragkörper, der an seinen radialen Seiten in Umfangsrichtung betrachtet Teilsegmente aus jeweils anisotrop weichmagnetisch einstückigen Material aufweist, und so ein Läufersegment ausbildet, wobei dieses Läufersegment, axial betrachtet, zwischen zwei insbesondere rondenförmigen Randelementen angeordnet ist und einen Zentralabschnitt bildet.

Die Lösung der gestellten Aufgabe gelingt ebenfalls durch einer dynamoelektrischen Maschine mit einem Reluktanzläufer mit einer Wellenbohrung, in die eine Welle drehfest eingesetzt ist, zumindest einen um diese Welle angeordneten Tragkörper, der an seinen radialen Seiten in Umfangsrichtung betrachtet Teilsegmente aus jeweils anisotrop weichmagnetisch einstückigen Material aufweist, und so ein Läufersegment ausbildet, wobei dieses Läufersegment, axial betrachtet, zwischen zwei insbesondere rondenförmigen Randelementen angeordnet ist und einen Zentralabschnitt bildet, die insbesondere für hohe Drehzahlen und geringe Achsdurchmesser geeignet ist.

Des Weiteren gelingt die Lösung der gestellten Aufgabe durch ein Verfahren zur Herstellung eines Reluktanzläufers mit einer Wellenbohrung, in die eine Welle drehfest eingesetzt ist, zumindest einen um diese Welle angeordneten Tragkörper, der an seinen radialen Seiten in Umfangsrichtung betrachtet Teilsegmente aus jeweils anisotrop weichmagnetisch einstückigen Material aufweist, und so ein Läufersegment ausbildet, wobei dieses Läufersegment, axial betrachtet, zwischen zwei insbesondere rondenförmigen Randelementen angeordnet ist und einen Zentralabschnitt bildet, durch folgende Schritte:
- Herstellen eines Tragkörpers und Positionieren dieses Tragkörpers auf einer Welle,
- Tragkörper an zumindest einem axialen Ende mit einem Randelement versehen,
- Einsetzen und Verkleben eines anisotrop weichmagnetischen Teilsegments mit den dazu korrespondierenden Flächen des Tragkörpers und/oder der Flächen der dazu korrespondierenden Randelemente.

Durch Verwendung von anisotrop weichmagnetischem Material, ist erfindungsgemäß nunmehr kein Blechverband eines Reluktanzläufers mehr notwendig. Unter anisotrop weichmagnetischem Material (awM) wird ein Material verstanden, das in einer Raumrichtung ein vergleichsweise schlechte magnetische Leitfähigkeit (µᵣ ≤ gleich 5) und in den anderen Raumrichtungen eine vergleichsweise gute magnetische Leitfähigkeit (µᵣ ≥ 20) aufweist. Die Basis dieses Material bilden die Selten Erden Neodymeisenbor (Nd-Fe-Bo).

Es sind somit einstückige Pole des Reluktanzläufers oder eines axialen Abschnitts des Läufers möglich. Um diese Pole ausreichend zu befestigen, sind Klebeflächen auf einem Tragkörper vorgesehen, die bei hohen Geschwindigkeiten um die Fliehkraft aufzunehmen, zusätzlich in axialer Richtung an den Randelementen verklebt werden. Diese Segmente der anisotrop weichmagnetischen Materialien werden somit zusätzliche an den sie angrenzenden Randelemente verklebt. Es sind somit pro anisotrop weichmagnetischen Segment maximal drei Klebeflächen vorhanden, zum einen auf dem Tragkörper und zwei an den axialen Enden dieses Segments mit den dazu korrespondierenden Flächen der Randelemente.

Der Tragkörper ist amagnetisch ausgeführt und trägt somit zum Magnetfluss und -führung nichts bei. Aus diesem Grund kann er aus Edelstahl, Aluminium oder Kunststoff aufgebaut sein. Zur Reduzierung der Trägheit des Reluktanzläufers kann auch eine Speichenkonstruktion als Tragkörper vorgesehen werden, die aber ebenso wie die anderen Tragkörperelemente drehfest mit der Welle verbunden sein müssen.

Diese Randelemente sind im einfachsten Fall eine Ronde, die mittig ein Loch für die Welle aufweist.

Durch eine vorgebbare axiale Segmentierung eines Pols des Reluktanzläufers und dem gleichzeitigen Einbringen von Randelementen kann die Klebefläche nahezu beliebig erhöht werden. Damit können auch höhere Fliehkraftbeanspruchungen aufgenommen werden. Es ist somit eine Anpassung an nahezu jede, insbesondere hohe (> 10000 U/min) Drehzahlanforderung der dynamoelektrischen Maschine möglich ist.

Aufgrund unterschiedlicher thermischer Eigenschaften des anisotrop weichmagnetischem Materials und der Tragkonstruktion werden vorzugsweise elastische Klebstoffe wie z.B. Silikone bevorzugt eingesetzt.

Der Tragkörper wird vorteilhafterweise kraft- oder stoffschlüssig mit der Welle verbunden, um das Drehmoment von oder zur Welle übertragen zu können. Die Welle ist ebenso amagnetisch ausgeführt, d.h. insbesondere mit einer relativen Permeabiltät von µᵣ <1,5.

In einer weiteren Ausführungsform kann die Welle aus magnetischem Stahl sein, in diesem Fall ist der Tragkörper komplett aus amagnetischem Material, so dass keine magnetisch leitfähige Verbindung mit der Welle besteht. Eine Erwärmung der Welle durch Wirbelstromverluste ist damit ausgeschlossen.

Durch die Verwendung von amagnetischem Material für den Tragkörper zwischen anisotrop weichmagnetischem Material und der Welle können auch magnetische Wellen verwendet werden, wodurch sich auch die Kosten eines derartigen Reluktanzläufers senken lassen.

Ein weiterer Vorteil des axial segmentierten Rotoraufbaus besteht darin, einzelne Segmente eines Pols des Reluktanzläufers um einen vorgebbaren Verdrehwinkel auf der Welle zu befestigen. Damit werden beispielsweise Pendeldrehmomente der dynamoelektrischen Maschine eliminiert. Dazu ist es erforderlich, dass der Rotor axial zumindest aus zwei axial hintereinander angeordneten Segmenten aufgebaut wird, so dass pro Pol ein Verdrehwinkel vorgesehen werden kann.

In einer speziellen Ausführung bei der beispielsweise der Drehstromständer achtzehn Nuten hat, werden die Segmente zueinander um den Staffelwinkel α = (1/n)·(360°/18) verdreht, wobei n die Anzahl der axialen Segmente des Reluktanzläufers pro Pol ist.

Vorteilhafterweise kann nunmehr bei dem Aufbau des Reluktanzläufers mit struktureller Klebung auf Bandagen im Luftspalt zum Zusammenhalten des Reluktanzläufers verzichtet werden, was zu einer höheren Ausnutzung der Maschine führt, wobei unter Ausnutzung der dynamoelektrischen Maschine das abgegebene Drehmoment an der Welle pro Volumen zu verstehen ist.

Die Erfindung sowie wesentliche Ausgestaltungen der Erfindung sind den beigefügten Ausführungsbeispielen zu entnehmen. Darin zeigen:
- FIG 1: Längsschnitt einer dynamoelektrischen Maschine,
- FIG 2: Aufbau eines Reluktanzläufers,
- FIG 3: fertiggestellter Reluktanzläufer.

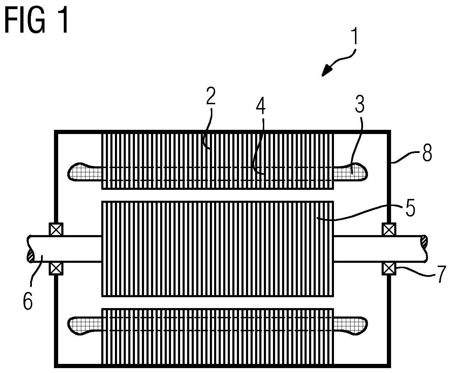

FIG 1 zeigt einen prinzipiellen Längsschnitt einer dynamoelektrischen Maschine 1 mit einem Reluktanzläufer 5. Ein Stator 2 dieser dynamoelektrischen Maschine 1 weist ein Wicklungssystem 3 auf, das in nicht näher dargestellter Nuten 4 des Statorblechpakets eingebettet ist. Durch elektromagnetische Wechselwirkung mit einem Rotor, der als Reluktanzläufer 5 ausgebildet ist, wird ein Drehmoment auf die Welle 6 übertragen. Oder, falls die dynamoelektrische Maschine 1 als Generator ausgebildet ist, wird das Drehmoment von der Welle 6 über den Reluktanzläufer 5 generatorisch in elektrische Energie umgewandelt.

Die Welle 6 ist in Lagern 7 gehalten, wobei die Lager 7 in einem Lagerschichtschild 8 positioniert sind.

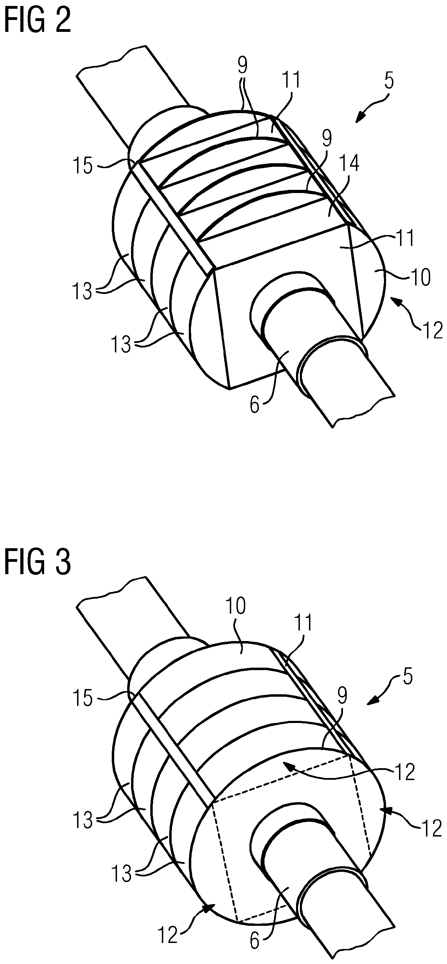

FIG 2 zeigt in perspektivischer Darstellung einen Aufbau eines Reluktanzläufers 5, wobei ein Tragkörper 11, in diesem Fall mehrere Tragkörper 11 axial hintereinander auf einer Welle 6 angeordnet sind. Zwischen den einzelnen Tragkörpern 11 eines jeglichen Läufersegments 13 sind rondenförmige Randelemente 9 vorgesehen. In dieser Darstellung ist die Positionierung von Teilsegmenten 10 aus anisotrop weichmagnetischen Material auf die nach oben weisende Seite 14 des Tragkörpers 11 noch nicht durchgeführt worden. Auf die anderen Seiten des Tragkörpers 11 sind bereits die einzelnen Teilsegmente 10 aus anisotrop weichmagnetischen Material positioniert. Diese Darstellung weist also vier Läufersegmente 13 auf.

Die Anordnung der einzelnen anisotropen weichmagnetischen Segmente 10 erfolgt durch Klebung an der oder den dazu korrespondierenden Seiten oder Flächen des Tragkörpers 11 und/oder an den dazu korrespondierenden Flächen der rondenförmigen Randelemente 9.

Zusätzlich können die Teilsegmente 10 aus anisotrop weichmagnetischen Material auch in dementsprechende Ausnehmungen an einem dafür vorgesehenen Rand 15 oder Nase des Tragkörpers 11 eingreifen und so eine zusätzliche radiale und/oder axiale Fixierung und/oder Positionierung erhalten.

FIG 3 zeigt einen fertigen Reluktanzläufer 5, bei dem an den Stirnseiten des Reluktanzläufers 5 als auch jeweils zwischen den einzelnen axialen Abschnitten also den Läufersegmenten 13 ein Randelement 9 vorgesehen ist. Im vorliegenden Ausführungsbeispiel ist keine Staffelung der Pole 12 und damit der Läufersegmente 13 um einen vorgebbaren Winkel durchgeführt.

Eine Staffelung der Pole 12 über die axiale Länge des Reluktanzläufers 5 betrachtet, lässt sich jedoch bei der Montage dadurch erreichen, dass jedes Läufersegment 13, das sich zumindest durch einen Tragkörper 11 und in diesem Fall durch vier Teilsegmente 10 aus anisotrop weichmagnetische Materialien ausbildet, um einen vorgebbaren Winkel in Umfangsrichtung betrachtet versetzt auf der Welle 6 angebracht wird. Dabei sind die Läufersegmente 13 durch die Randelemente 9 voneinander getrennt, wobei die Teilsegmente 10 ebenfalls mit den Randelementen 9 stoffschlüssig, insbesondere verklebt sind.

Anwendungen eines derartigen Reluktanzläufer 5 und dementsprechenden dynamoelektrischen Maschine 1 sind insbesondere bei vergleichsweise kleinen Motoren/Generatoren (Achshöhe ca. 15 bis über 300 mm) mit sehr hohen Drehzahlen besonders geeignet. So sind derartige Motoren auch in Anwendungen bei E-Car oder E-Aircraft einsetzbar, insbesondere wenn der Tragkörper aus speicherartiger sehr leichter Tragkonstruktion besteht, die dann die gesamte Anordnung (Antrieb oder Generator) vergleichsweise leicht gestalten und so eine hohe Leistungsdichte und hohe Ausnutzung der dynamoelektrischen Maschine 1 gewährleisten.

## Patentansprüche

1. Reluktanzläufer (5) mit einer Wellenbohrung, in die eine Welle (6) drehfest eingesetzt ist, zumindest einen um diese Welle (6) angeordneten Tragkörper (11), **dadurch gekennzeichnet, dass** er an seinen radialen Seiten (14) in Umfangsrichtung betrachtet Teilsegmente (10) aus jeweils anisotrop weichmagnetisch einstückigen Material aufweist, und so ein Läufersegment (13) ausbildet, wobei dieses Läufersegment (13), axial betrachtet, zwischen zwei insbesondere rondenförmigen Randelementen (9) angeordnet ist und einen Zentralabschnitt bildet.

2. Reluktanzläufer (5) nach Anspruch 1, **dadurch gekennzeichnet, dass** sich in axialer Richtung weitere Läufersegmente (13) axial unmittelbar an den Zentralabschnitt anschließen, wobei jedes weitere Läufersegment (13) durch ein oder zwei Randelemente (9) begrenzt ist.

3. Reluktanzläufer (5) nach Anspruch 1 oder 2, **dadurch gekennzeichnet, dass** der Tragkörper (11) amagnetisch ausgeführt ist.

4. Reluktanzläufer (5) nach Anspruch 3, **dadurch gekennzeichnet, dass** der Tragkörper (11) aus Edelstahl, Aluminium oder Kunststoff ausgeführt ist und/oder eine speichenartige Tragstruktur aufweist.

5. Reluktanzläufer (5) nach Anspruch 3 oder 4, **dadurch gekennzeichnet, dass** der Tragkörper (11) mit der Welle (6) durch Kraft und/oder Formschluss verbunden ist.

6. Reluktanzläufer (5) nach einem oder mehreren der vorhergehenden Ansprüche, **dadurch gekennzeich**n e t , dass pro Pol (12) des Reluktanzläufers (5) zumindest ein anisotrop weichmagnetisches Teilsegment (10) vorgesehen ist, das einstückig ausgeführt ist und sich unterschiedliche Anisotropien in den Raumrichtungen dieses Teilsegments (13) ergeben.

7. Reluktanzläufer (5) nach einem der vorhergehenden Ansprüche, **dadurch gekennzeichnet, dass** die Läufersegmente (13) zueinander unterschiedliche Verdrehwinkel aufweisen und so eine Staffelung eines Pols (12) über die axiale Länge des Reluktanzläufers (5) schaffen.

8. Reluktanzläufer (5) nach einem der vorhergehenden Ansprüche, **dadurch gekennzeichnet, dass** die anisotrop weichmagnetisch Teilsegmente (10) durch Klebung auf dem Tragkörper (5) und/oder an den Randelementen (9) durch elastische Klebstoffe, wie z.B. Silikone positioniert und fixiert sind.

9. Dynamoelektrische Maschine (1), insbesondere Maschinen geringer Achshöhe und vergleichsweise hoher Drehzahl mit einem Reluktanzläufer (5) nach einem der vorhergehenden Ansprüche 1 bis 8.

10. Verwendung einer dynamoelektrischen Maschine (1) nach Anspruch 9 bei Werkzeugmaschinen, Produktionsmaschinen oder bei E-Aircraft, wie Hubschraubern und Flugzeugen als auch bei Traktionsantrieben von Loks, oder Straßenbahnen ebenso wie bei E-Cars.

11. Verfahren zur Herstellung eines Reluktanzläufers (5) mit einer Wellenbohrung, in die eine Welle (6) drehfest eingesetzt ist, zumindest einen um diese Welle (6) angeordneten Tragkörper (11), **dadurch gekennzeichnet, dass** er an seinen radialen Seiten (14) in Umfangsrichtung betrachtet Teilsegmente (10) aus jeweils anisotrop weichmagnetisch einstückigen Material aufweist, und so ein Läufersegment (13) ausbildet, wobei dieses Läufersegment (13), axial betrachtet, zwischen zwei insbesondere rondenförmigen Randelementen (9) angeordnet ist und einen Zentralabschnitt bildet, durch folgende Schritte:
- Herstellen eines Tragkörpers (11) und Positionieren dieses Tragkörpers (11) auf einer Welle (6),
- Tragkörper (11) an zumindest einem axialen Ende mit einem Randelement (9) versehen,
- Einsetzen und Verkleben eines anisotrop weichmagnetischen Teilsegments (13) mit den dazu korrespondierenden Flächen des Tragkörpers (11) und/oder der Flächen der dazu korrespondierenden Randelemente (9).

## Claims

1. Reluctance armature (5) with a shaft hole, into which a shaft (6) is inserted in a torsion-proof manner, at least one carrier body (11) disposed around this shaft (6), **characterised in that** on its radial sides (14) viewed in the circumferential direction, it has part segments (10) made of anisotropic soft-magnetic one-piece material in each case, and thus forms an armature segment (13), wherein this armature segment (13), viewed in the axial direction, is disposed between two especially disk-shaped edge elements (9) and forms a central section.

2. Reluctance armature (5) according to claim 1, **characterised in that** in the axial direction further armature segments (13) directly axially adjoin the central section, wherein each further armature segment (13) is delimited by one or two edge elements (9).

3. Reluctance armature (5) according to claim 1 or 2, **characterised in that** the carrier body (11) is an amagnetic design.

4. Reluctance armature (5) according to claim 3, **characterised in that** the carrier body (11) is a stainless steel, aluminium or plastic design and/or has a spoke carrier structure.

5. Reluctance armature (5) according to claim 3 or 4, **characterised in that** the carrier body (11) is connected to the shaft (6) by a force fit and/or form fit.

6. Reluctance armature (5) according to one or more of the preceding claims, **characterised in that** per pole (12) of the reluctance armature (5) at least one anisotropic soft-magnetic part segment (10) is provided, which is a one-piece design and different anisotropies are produced in the spatial directions of this part segment (13).

7. Reluctance armature (5) according to one of the preceding claims, **characterised in that** the armature segments (13) have different angles of rotation in relation to one another and thus create a staggering of a pole (12) over the axial length of the reluctance armature (5).

8. Reluctance armature (5) according to one of the preceding claims, **characterised in that** the anisotropic soft-magnetic part segments (10) are positioned and fixed by gluing to the carrier body (5) and/or to the edge elements (9) by elastic adhesives, such as silicones for example.

9. Dynamoelectric machine (1), especially machines of small shaft height and comparatively high speed with a reluctance armature (5) according to one of the preceding claims 1 to 8.

10. Use of a dynamoelectric machine (1) according to claim 9 in machine tools, production machines or in E-aircraft, such as helicopters and airplanes and also in traction drives of locos or streetcars, likewise in E-cars.

11. Method for manufacturing a reluctance armature (5) with a shaft hole into which a shaft (6) is inserted in a torsion-proof manner, at least one carrier body (11) disposed around this shaft (6), **characterised in that** on its radial sides (14) viewed in the circumferential direction, it has part segments (10) made from anisotropic soft-magnetic one-piece material in each case, and thus forms an armature segment (13), wherein this armature segment (13), viewed axially, is disposed between two especially disk-shaped edge elements (9) and forms a central section, by the following steps:
- Manufacturing a carrier body (11) and positioning this carrier body (11) on a shaft (6),
- Providing the carrier body (11) at at least one axial end with an edge element (9),
- Insertion and gluing of an anisotropic soft-magnetic part segment (13) with the surfaces of the carrier body (11) corresponding thereto and/or the surfaces of the edge elements (9) corresponding thereto.

## Revendications

1. Rotor (5) à réluctance comprenant un alésage d'arbre dans lequel un arbre (6) est inséré d'une manière fixe en rotation, au moins un corps porteur monté autour de l'arbre (6) **caractérisé en ce qu'**il a sur ses côtés (14) radiaux considérés dans la direction périphérique des segments (10) partiels en un matériau d'une seule pièce à magnétisme doux d'une manière anisotrope, et forme ainsi un segment (13) du rotor, ce segment (13) du rotor, considéré axialement, étant disposé entre deux éléments (9) de bord, notamment de forme circulaire, et une partie centrale.

2. Rotor (5) à réluctance suivant la revendication 1, **caractérisé en ce que** dans la direction axiale d'autres segments (13) de rotor se raccordent axialement directement à la partie centrale, chaque autre segment (13) de rotor étant délimité par un élément (9) de bord ou par deux éléments (9) de bord.

3. Rotor (5) à réluctance suivant la revendication 2, **caractérisé en ce que** le corps (11) porteur est amagnétique.

4. Rotor (5) à réluctance suivant la revendication 3, **caractérisé en ce que** le corps (11) porteur est en acier fin, en aluminium ou en une matière plastique et/ou a une structure porteuse de type à rayons.

5. Rotor (5) à réluctance suivant la revendication 3 ou 4, **caractérisé en ce que** le corps (11) porteur est relié à l'arbre (6) à coopération de force et/ou à complémentarité de forme.

6. Rotor (5) à réluctance suivant l'une ou plusieurs des revendications précédentes, **caractérisé en ce que**, par pôle (12) du rotor (5) à réluctance est prévu au moins un segment (10) partiel à magnétisme doux, de façon isotrope, qui est réalisé en une seule pièce et il s'ensuit des anisotropies différentes dans les directions de l'espace de ce segment (13) partiel.

7. Rotor (5) à réluctance suivant l'une des revendications précédentes, **caractérisé en ce que** les segments (13) de rotor ont des angles de torsion différents les uns des autres et ménagent ainsi un décalage d'un pôle (12) sur la longueur axiale du rotor (5) à réluctance.

8. Rotor (5) à réluctance suivant l'une des revendications précédentes, **caractérisé en ce que** les segments (10) partiels à magnétisme doux de manière anisotrope sont mis en position et immobilisés par collage sur le corps (5) porteur et/ou sur les éléments (9) de bord par des colles élastiques, comme par exemple de la silicone.

9. Machine (1) dynamoélectrique, notamment machines ayant une hauteur d'axe petite et une vitesse de rotation relativement grande, ayant un rotor (5) à réluctance suivant l'une des revendications 1 à 8.

10. Utilisation d'une machine (1) dynamoélectrique suivant la revendication 9 dans des machines-outils, des machines de production ou en E-aircraft, comme des hélicoptères et des avions, ainsi que dans des entraînements de traction de locomotives ou dans des tramways, tout comme dans des E-cars.

11. Procédé de fabrication d'un rotor (5) à réluctance comprenant un alésage d'arbre, dans lequel un arbre (6) est inséré de manière fixe en rotation, au moins un corps (11) porteur monté autour de cet arbre (6), caractérisé en en ce qu'il a sur ses côtés (14) radiaux considérés dans la direction périphérique des segments (10) partiels en un matériau d'une seule pièce à magnétisme doux d'une manière anisotrope et forme ainsi un segment (13) du rotor, ce segment (13) du rotor, considéré axialement, étant disposé entre deux éléments (9) de bord, notamment de forme circulaire, et une partie centrale, par les stades suivantes :
- fabriquer un corps (11) porteur et mettre en position ce corps (11) porteur autour d'un arbre (6),
- munir le corps (11) porteur à au moins une extrémité axiale d'un élément (9) de bord,
- insérer et coller un segment (13) partiel à magnétisme doux de manière anisotrope avec surfaces qui y correspondent du corps (11) porteur et/ou les surfaces des éléments (9) qui y correspondent.
